Europäisches Patentamt

European Patent Office

Office européen des brevets

(11) Publication number: **0 412 556 A2**

# EUROPEAN PATENT APPLICATION

(21) Application number: **90115395.7**

(22) Date of filing: **10.08.90**

(51) Int. Cl.5: **G11B 7/08**

(30) Priority: **11.08.89 JP 208709/89**

(43) Date of publication of application:
**13.02.91 Bulletin 91/07**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Uchimaru, Kiyotaka**
**204 Toshibayurigaoka-ryo, 4-16-18 Takaishi**
**Asao-ku, Kawasaki-shi, Kanagawa-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) Information recording and regenerating apparatus.

(57) An information recording and regenerating apparatus comprises a fixed frame (1), a moveable body (7) having an object lens (5) and disposed inside the fixed frame (1), a plurality of elastic members (11) each having an end fixed to the moveable body (7) and another end fixed to the frame (1) to moveably support the moveable body (7), a first electromagnetic driving mechanism (13) for vertically moving the object lens (5), and a second electromagnetic driving mechanism (13) for horizontally moving the object lens (5). The elastic members (11) are disposed such that their line segments each extending between the point fixed to the moveable body (7) and the point fixed to the frame (1) are in parallel with one another.

FIG.4

# INFORMATION RECORDING AND REGENERATING APPARATUS

## BACKGROUND OF THE INVENTION

### 1. Field of the Invention

The present invention relates to an optical apparatus for recording and regenerating information, and particularly to an information recording and regenerating apparatus that can correctly move an object lens thereof in vertical and horizontal directions without tilting an optical axis of the object lens.

### 2. Description of the Prior Art

Generally, in an optical apparatus for recording and regenerating information with use of a laser beam, an object lens focuses the laser beam on a fine spot on a recording medium to read or write a signal to and from the recording medium. To let the object lens correctly read or write information, it is necessary to support and precisely adjust the object lens along a focusing axis, i.e., in a vertical direction and along a tracking axis, i.e., in a horizontal direction.

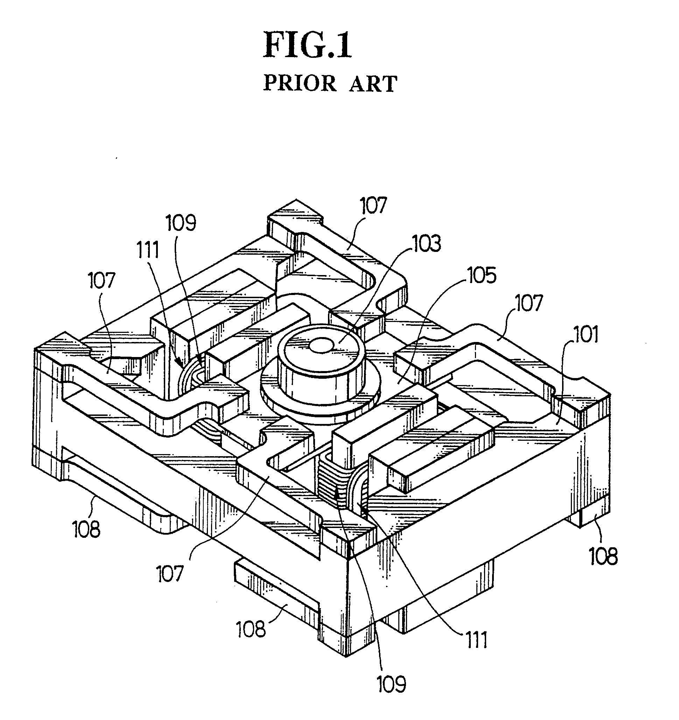

Figure 1 shows an example of means for supporting an object lens 103. The supporting means comprises a fixed frame 101, a movable body 105 having the object lens 103, and each four elastic members 107 and 108. The four elastic members 107 are arranged on an upper surface side of the frame 101, and the four elastic members 108 are arranged on a lower surface side of the frame 101. The elastic members 107 and 108 are arranged line-symmetrically to support and move the movable body 105 in vertical and horizontal directions. Electromagnetic driving mechanisms 109 and 111 drive the movable body 105 with the object lens 103 vertically and horizontally.

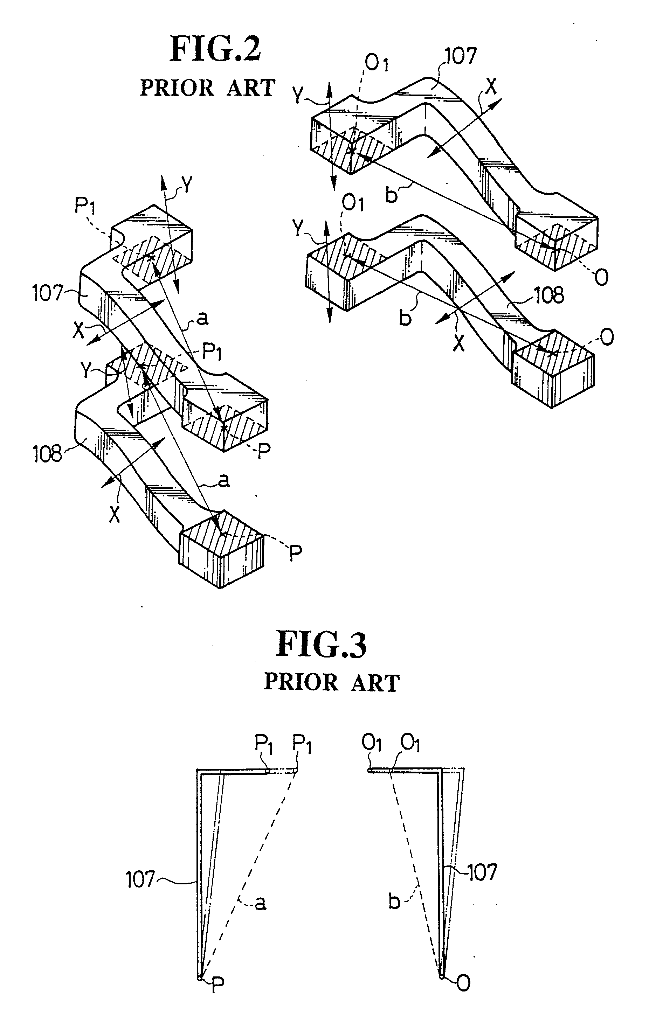

Each of the elastic members 107 and 108 has an L-shaped face. Due to this shape, the elastic member can smoothly move in the horizontal direction of an arrow mark X of Fig. 2 and in the vertical direction of an arrow mark Y.

When the electromagnetic driving mechanism 111 moves the object lens 103 rightward as shown in Fig. 3, the elastic members 107 and 108 deform and elongate. At this time, a difference occurs between a distance "a" from a fixed point P to a fixed point P1 of the left elastic member 107 and a distance "b" from a fixed point 0 to a fixed point 01 of the right elastic member 107. Each elastic member 107 increases its restoring force in proportion to its elongation, so that the left elastic member 107 whose elongation is larger than that of the right elastic member 107 causes larger tension. This produces an imbalance in tension on the left and right elastic members 107 to destabilize a posture of the object lens 103 and tilt an optical axis thereof.

## SUMMARY OF THE INVENTION

An object of the present invention is to provide an information recording and regenerating apparatus that can correctly move an object lens vertically and horizontally without tilting an optical axis of the object lens.

In order to accomplish the object, an information recording and regenerating apparatus according to the present invention comprises a fixed frame, a movable body having an object lens and disposed inside the fixed frame, a plurality of elastic members each having an end fixed to the movable body and another end fixed to the frame to movably support the movable body, a first electromagnetic driving mechanism for vertically moving the object lens, and a second electromagnetic driving mechanism for horizontally moving the object lens. The elastic members are disposed such that their line segments each extending between the point fixed to the movable body and the point fixed to the frame are in parallel with one another.

According to another aspect of the present invention, an information recording and regenerating apparatus comprises a fixed frame, a movable body having an object lens and disposed inside the fixed frame, a plurality of elastic members each having an end fixed to the movable body and another end fixed to the frame to movably support the movable body, a first electromagnetic mechanism for vertically moving the object lens, and a second electromagnetic driving mechanism for horizontally moving the object lens. The elastic members face one another along driving directions of the movable body and are substantially symmetrical with respect to the driving directions.

In the information recording and regenerating apparatus of the present invention, the movable body is moved in horizontal and vertical directions to correctly focus a laser beam on a spot on the surface of a recording medium. Each of the elastic members is formed in a balanced channel shape or C shape so that the fixed portions of all the elastic members may be moved substantially by an equal distance. Accordingly, no tensile difference occurs on the elastic members, thereby correctly maintaining a posture of the object lens with no tilt in an optical axis of the object lens.

When the elastic members are arranged substantially symmetrically along the moving directions of the object lens, the elastic members disposed on the upper surface of the frame are subjected to different tension in moving the object lens, for example, horizontally. At this time, the elastic members disposed on the lower surface of the frame are also subjected to different tension. The differences in tension, however, cancel one another in the terms of vertical and horizontal relations of the elastic members, thereby balancing the tension acting on the elastic members as a whole. As a result, a posture of the object lens is correctly maintained with no tilt in an optical axis of the object lens.

These and other objects, features and advantages of the present invention will be more apparent from the following detailed description of preferred embodiments in conjunction with the accompanying drawings.

BRIEF DESCRIPTION OF THE DRAWINGS

Fig. 1 is a perspective view showing an information recording and regenerating apparatus according to a prior art;
Figs. 2 and 3 are views explaining an operation of elastic members of Fig. 1;
Fig. 4 is a perspective view showing an information recording and regenerating apparatus according to an embodiment of the present invention;
Figs. 5 and 6 are views explaining an operation of elastic members of Fig. 4;
Figs. 7, 8 and 9 are perspective views showing modifications of an elastic member, respectively, according to the present invention;
Fig. 10 is a perspective view showing an information recording and regenerating apparatus according to another embodiment of the present invention; and
Fig. 11 is a view explaining an operation of elastic members of Fig. 10.

DETAILED DESCRIPTION OF THE EMBODIMENTS

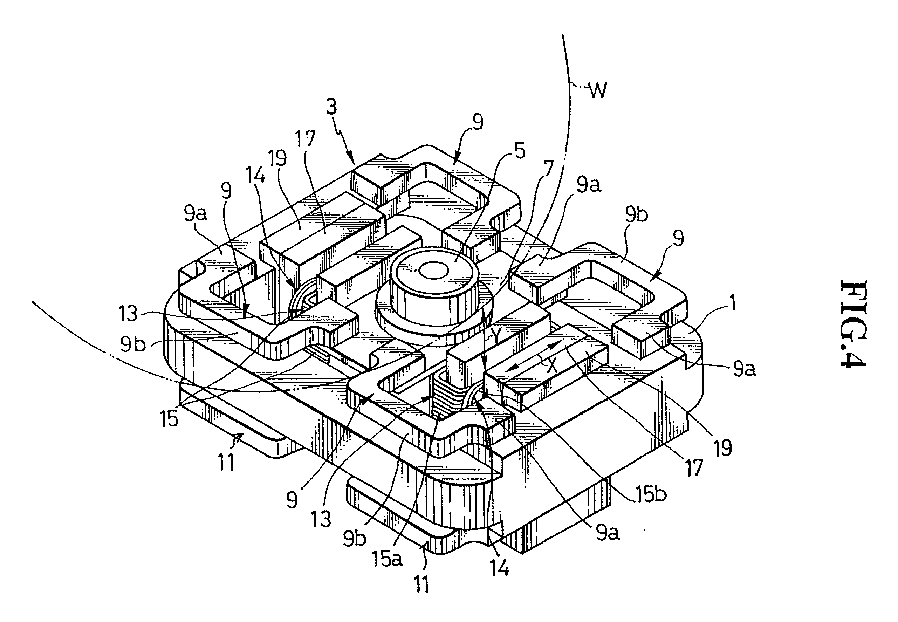

An embodiment of the present invention will be explained in detail with reference to Figs. 4 to 6.

In Fig. 4, an information recording and regenerating apparatus 3 has a fixed frame 1. The frame 1 is formed substantially in a rectangular shape. An object lens 5 is integrally fitted to a movable body 7, which is disposed at the center of the frame 1.

The movable body 7 is supported by four elastic members 9 disposed on the upper surface of the frame 1 and by four elastic members 11 disposed on the lower surface of the frame 1. A pair of first electromagnetic driving mechanisms 13 drive the movable body 7 in a focusing direction, i.e., a vertical direction. A pair of second electromagnetic driving mechanisms 14 drive the movable body 7 in a tracking direction, i.e., a horizontal direction.

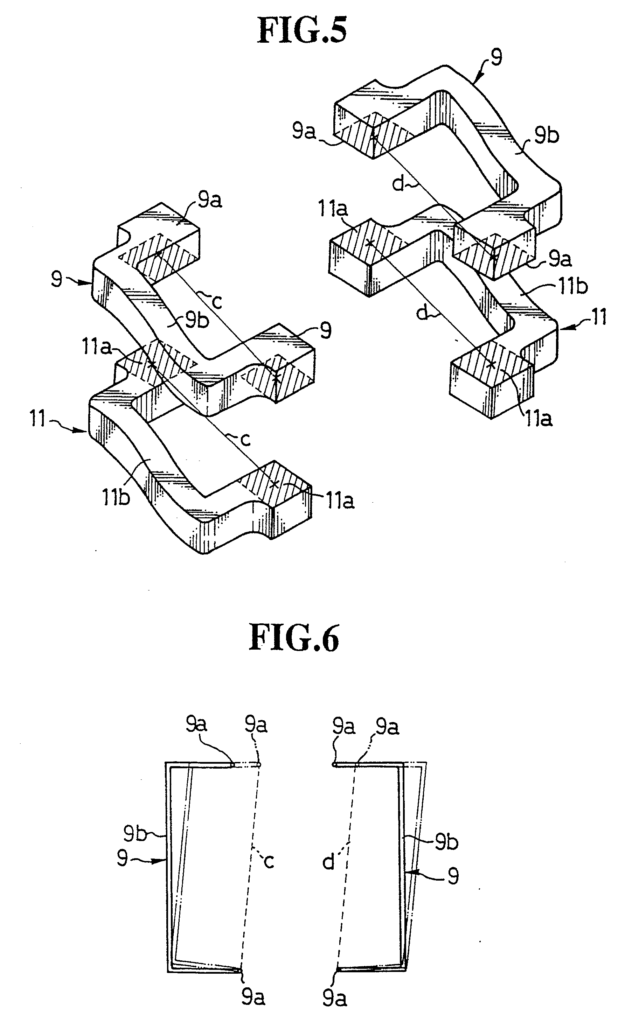

As shown in Fig. 5, each of the upper elastic members 9 made of silicon rubber, etc., has fixed portions 9a at each end thereof. By means of sintering, etc., one of the fixed portions 9a is fixed to the movable body 7 and the other to the frame 1. A body portion 9b of each elastic member 9 extends between the fixed portions 9a and is formed in a channel shape. The four elastic members 9 are line-symmetrically arranged such that their line segments each extending between the fixed portions 9a are in parallel with one another.

Similarly, each of the lower elastic members 11 made of silicon rubber, etc., has fixed portions 11a at each end thereof. By means of sintering, etc., one of the fixed portions 11a is fixed to the movable body 7 and the other to the frame 1. A body portion 11b of each elastic member 11 extends between the fixed portions 11a and is formed in a channel shape. The four elastic members 11 are line-symmetrically arranged such that their line segments each extending between the fixed portions 11a are in parallel with one another.

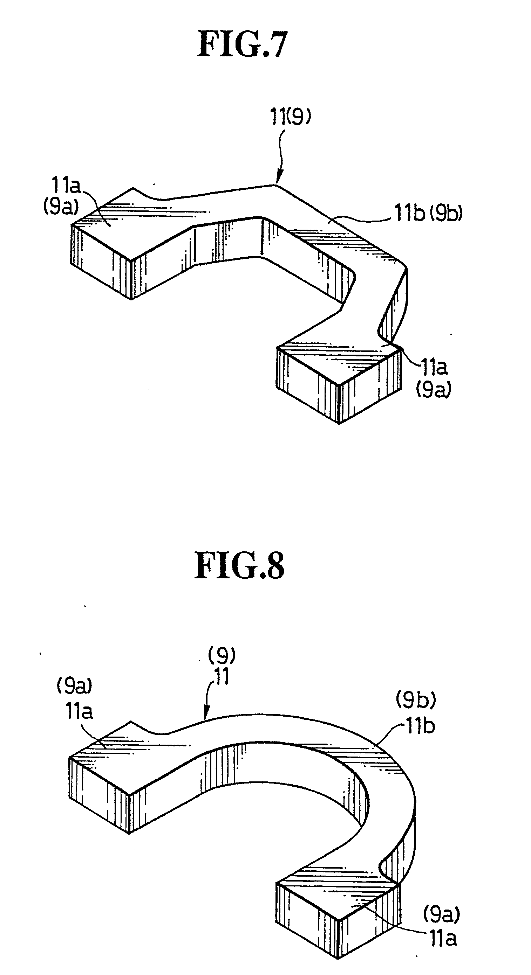

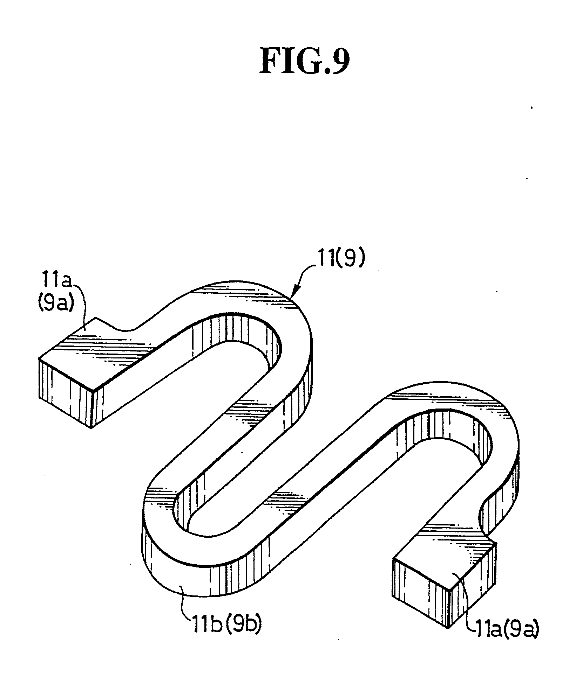

As shown in Figs. 7 to 9, each of the body portions 9b and 11b of the upper and lower elastic members 9 and 11 may be formed in a square shape, an arch shape, or a complicated wave shape.

As shown in Fig. 4, the first and second electromagnetic driving mechanisms 13 and 14 comprise coils 15a and 15b, permanent magnets 17, and yokes 19. The mechanisms 13 and 14 are fitted to the movable body 7. Winding directions of the coils 15a and 15b are orthogonal to each other. When an electric current is supplied to the coils 15a or 15b of the first or the second electromagnetic driving mechanisms 13 or 14, the movable body 7 is moved vertically in the direction of an arrow mark Y or horizontally in the direction of an arrow mark X.

In the information recording and regenerating apparatus 3 of the above arrangement, an electric current is supplied to the coils 15a and 15b to vertically and horizontally move the object lens 5 toward a particular position, thereby focusing a laser beam on a correct spot on a recording medium W. When the object lens 5 is moved rightward as shown in Fig. 6, the left and right elastic members 9 are moved in the same direction by an equal distance as indicated with dotted lines. Namely, a distance "c" between the fixed portions 9a of the left elastic member 9 is equal to a distance "d" between the fixed portions 9a of the right elastic member 9 because they are arranged in parallel with each other. No tensile difference is caused, therefore, in the elastic members 9 on the upper and lower surfaces of the frame 1. This secures a posture of the object lens 5 correctly with no tilt in an optical axis of the object lens 5.

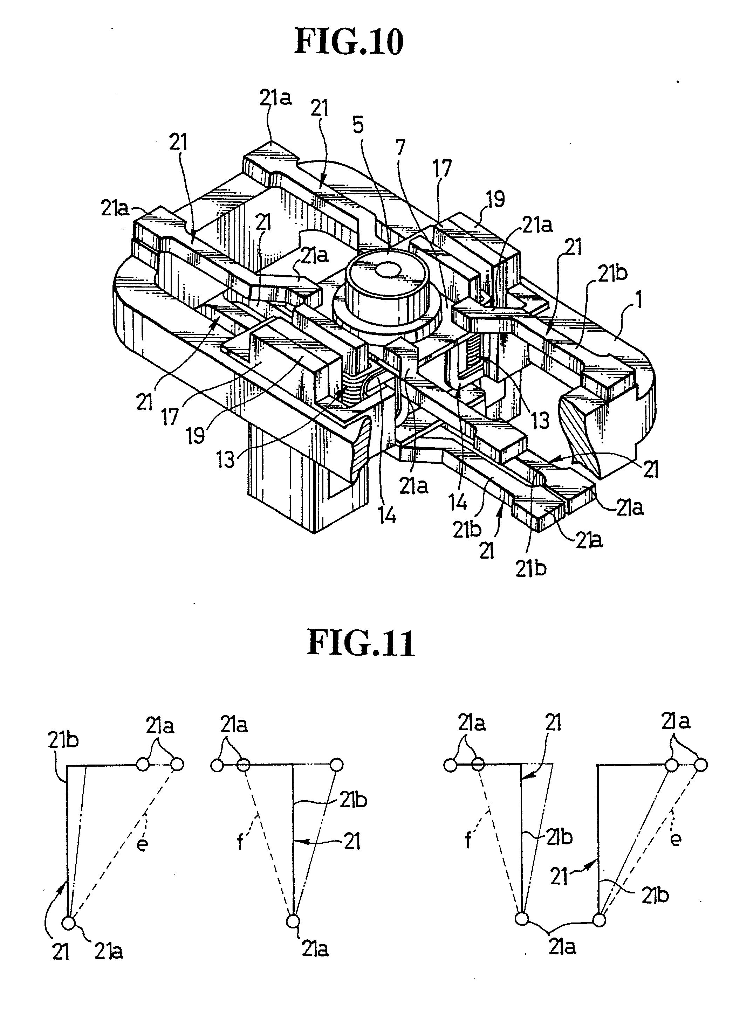

Figure 10 shows an information recording and regenerating apparatus according to another embodiment of the present invention.

Each elastic member 21 of this embodiment comprises fixed portions 21a fixed to a movable body 7 and a frame 1, respectively, and an elastic body portion 21b extending between the fixed portions 21a. The elastic member 21 is formed substantially in an L-shape. Four pieces of the elastic members are line-symmetrically disposed on the upper surface of the frame 1, and other four pieces of the elastic members are line-symmetrically disposed on the lower surface of the frame 1. As shown in Fig. 10, arrangement of the elastic members 21 is also symmetrical in a vertical relationship.

Other parts of the embodiment of Fig. 10 are the same as those of Fig. 4 so that they are represented with like numerals and their explanations are omitted.

When an object lens 5 of this embodiment is moved rightward as shown in Fig. 11, distances "e" and "f" between the fixed portions 21a of the upper and lower elastic members 21 on the left-hand side differ from each other. Namely, large and small tensions occur in the upper and lower elastic members 21 on the left-hand side, respectively. They, however, cancel each other because the upper and lower elastic members 21 are symmetrically arranged. Similarly, the upper and lower elastic members 21 on the right-hand side are subjected to large and small tensions that cancel each other, thus balancing the tensions.

As a result, a posture of the object lens 5 is secured with no tilt in an optical axis of the object lens 5.

The shape of each resilient member is not limited to the one explained above but optionally selected.

In summary, the present invention moves an object lens in vertical and horizontal directions with use of elastic members that apply equal forces to the object lens, thereby correctly maintaining a posture of the object lens with no tilt in an optical axis of the object lens.

Various modifications will become possible for those skilled in the art after receiving the teachings of the present disclosure without departing from the scope thereof.

**Claims**

1. An information recording and regenerating apparatus comprising:
   (a) a fixed frame
   (b) a movable body having an object lens and disposed inside said fixed frame;
   (c) a first electromagnetic driving mechanism for driving the object lens in a vertical direction and a second electromagnetic driving mechanism for driving the object lens in a horizontal direction; and
   (d) a plurality of elastic members for movably supporting said movable body, each of said elastic members having an end fixed to said movable body and another end fixed to said fixed frame,
   (e) said elastic members being disposed such that their line segments each extending between the end fixed to said movable body and the end fixed to said fixed frame are substantially in parallel with one another.

2. The information recording and regenerating apparatus as claimed in claim 1, wherein said elastic members have an identical shape.

3. The information recording and regenerating apparatus as claimed in claim 2, wherein each of said elastic members has at least one curved portion.

4. The information recording and regenerating apparatus as claimed in claim 3, wherein each of said elastic members has a channel shape.

5. An information recording and regenerating apparatus comprising:
   (a) a fixed frame;
   (b) a movable body having an object lens and disposed inside said fixed frame;
   (c) a first electromagnetic driving mechanism for driving the object lens in a vertical direction and a second electromagnetic driving mechanism for driving the object lens in a horizontal direction; and
   (d) a plurality of elastic members for movably supporting said movable body, each of said elastic members having an end fixed to said movable body and another end fixed to said fixed frame,
   (e) said elastic members being symmetrically disposed on each side of the vertical and horizontal directions to face one another.

# FIG.1
## PRIOR ART

# FIG.2
## PRIOR ART

# FIG.3
## PRIOR ART

# FIG.4

# FIG.5

# FIG.6

# FIG.7

# FIG.8

# FIG.9

11(9)

11a
(9a)

11b(9b)

11a(9a)

# FIG.10

# FIG.11